# EUROPEAN PATENT APPLICATION

(11) **EP 4 844 997 A1**
(43) Date of publication of application: **25.11.2026**
(21) Application number: 26178930.9
(22) Date of filing: 15.05.2026
(51) Int. Cl.: H02K 7/14, H02K 1/18, H02K 5/10, H02K 21/22

(54) **AN IN-WHEEL MOTOR**

(30) Priority: 22.05.2025 CN 202510667715
(71) Applicant: Hengye Intelligent Drive (Hangzhou) Co., Ltd, Hangzhou, Zhejiang 310018 (CN)
(72) Inventor: CHENG, Yongjiu, Hangzhou, 310018 (CN); ZHU, Min, Hangzhou, 310018 (CN); LIN, Peng, Hangzhou, 310018 (CN)
(74) Representative: Bryn Aarflot AS

(57) **Abstract**

The present disclosure discloses an in-wheel motor, and relates to the technical field of motor, said in-wheel motor comprises: a mounting base; a stator connected to the mounting base; a rotor rotatably sleeved over the outer side of the stator, the rotor is of a semi-closed structure and is in clearance fit with the mounting base at one end of the rotor, a drainage passage with at least some sections extending in the radial direction is formed between the rotor and the mounting base. In the actual use of the in-wheel motor of the present disclosure, especially when driving on wet or waterlogged pavement, water entering the interior of the wheel hub can be drained along the drainage passage, thereby avoiding the problem of water accumulation inside the in-wheel motor.

## Description

### Technical Field

The present invention relates to the technical field of motor, in particular to an in-wheel motor.

### Background Art

In-wheel motor, also know as electric wheel, is a motor that integrates power, transmission, and braking devices inside the wheel hub and belongs to a driving device that integrates the motor, the reducer and the brake into a whole. Working principle of the in-wheel motor is to directly connect rotor of the motor to the wheel hub with stator of the motor being installed inside the wheel hub. When the motor is energized, the magnetic field generated by the stator interacts with the magnetic field of the rotor, generating torque to drive the wheel hub to rotate, and thereby driving the vehicle to move forward.

Chinese patent document CN208479361U discloses an outer-rotor in-wheel motor with an externally mounted electromagnetic brake, this motor consists of a stator, an outer rotor, a shaft core, and an electromagnetic brake, wherein the motor and the electromagnetic brake are respectively mounted on the shaft core, the outer rotor is sleeved on the outer side of the stator, and a tire is further sleeved on the outer side of the outer rotor. During actual use, the outer rotor is driven to rotate by energizing the coil pack on the stator, and the electromagnetic brake cooperates with the brake pad connected on the outer rotor to achieve braking of the outer rotor.

However, when applying the above solution to unmanned ground cleaning devices, some problems may arise. As an intelligent floor washing and cleaning device that integrates functions such as floor washing, drying, dust pushing, and dirt removing, the unmanned floor cleaning and dust collecting robot involves many water spraying operations in its working environment. Although sealing treatment is made between the stator and the outer rotor in the above solution, the sealing effect is gradually decreased over time, resulting in inadequate sealing, which makes it easy for water to accumulate between the magnets inside the outer rotor and the coil pack. Long time water accumulation can easily lead to corrosion problems, which in turn can affect the service life of device.

### Contents of the Invention

In view of this, the present invention provides an in-wheel motor to solve the problem of the in-wheel motor in prior art that, when the in-wheel motor is applied in water-related device, the sealing between the stator and the rotor fails to completely avoid water accumulation in the in-wheel motor caused by water ingress inside the in-wheel motor.

In a first aspect, the present application provides an in-wheel motor comprising:
A mounting base;
A stator connected to the mounting base;
A rotor rotatably sleeved on the outer side of the stator, wherein the rotor has a semi-closed structure, the rotor is in clearance fit with the mounting base at one end of the rotor, and a drainage passage with at least some sections extending in the radial direction is formed between the rotor and the mounting base.

The technical solution of the present invention has the following advantages:
During actual use of the in-wheel motor, especially when driving on wet or waterlogged pavement, water entering the interior of the wheel hub can be drained through the drainage passage to avoid the problem of water accumulation inside the in-wheel motor.

Optionally, the drainage passage has a first section extending in the radial direction and a second section extending in the axial direction, the outlet of the second section faces toward the side close to the mounting base, a sealing ring is arranged on the mounting base at the outlet of the second section, there is a spacing between the sealing ring and the outlet of the second section, a labyrinth passage is formed between the sealing ring and the rotor, and the outlet of the labyrinth passage faces towards the side away from the mounting base.

Through the above arrangement, multi-stage water defense lines are formed. When external moisture attempts to enter the interior of the in-wheel motor, a large amount of water ingress can be effectively resisted by means of resistance of the sealing ring. The design of the sealing ring reduces the direct erosion of moisture on components such as the mounting base and the rotor. Without such a design, when operate in a humid environment for a long time, the continuous erosion of moisture may cause the surface materials of the mounting base and the rotor to fall off or be damaged, affecting the structural stability of the motor. And now this design can effectively reduce such ingress, extend the service life of components, and improve the overall reliability of the motor.

Optionally, the labyrinth passage includes a third section extending in the radial direction and a fourth section extending in the axial direction. Through such an arrangement, the difficulty for the moisture to enter into the interior of the motor is further increased.

Optionally, the mounting base includes a mounting cylinder extending in the axial direction, and the stator is mounted on the mounting cylinder. Such an arrangement makes the layout of the interior of the in-wheel motor more compact. The mounting cylinder extending in the axial direction provides a more stable mounting foundation for the stator, effectively utilizing the axial space inside the in-wheel motor.

Optionally, the mounting base has a central hole in which a central shaft is rotatably arranged, one end of the central shaft is fixedly connected to the rotor and the other end of the central shaft is connected with a braking device, the braking device maintains braking on the central shaft in a normal condition and releases braking on the central shaft when energized. Through mounting the central shaft in the central hole of the mounting base, the central hole provides a stable support for the central shaft and limits the radial displacement and axial displacement of the central shaft during rotation. A compact integration of motor driving and the braking functions on the same shaft system is achieved by connecting the other end of the central shaft with the braking device. Such integration design reduces occupation of space of vehicle chassis, simplifies the connection structure between the braking system and the drive system of the vehicle. Compared to the conventional layout of separating the braking device from the motor, this design makes the overall structure of the vehicle more compact and is conducive to lightweight design and space optimization of the vehicle.

Additionally, the braking device is directly connected to the central shaft for quick and effective brake. Specifically, the braking device adopts a power-off braking device, when the vehicle stops running, the braking device will immediately transmit the braking force to the central shaft to ensure that the central shaft remains in a stopped state, thereby avoiding the situation of arbitrary rotation of the wheels. Such a direct connection form significantly shortens the response time during the braking process, effectively improves braking efficiency and provides strong guarantees for safe stopping of vehicles.

Optionally, the braking device includes an electromagnetic brake body and a shaft sleeve, the electromagnetic brake body is connected to the mounting base, the shaft sleeve is connected to the central shaft, the electromagnetic brake body includes a brake disc and a pressure disc, the brake disc is in circumferential limiting fit with the shaft sleeve, and the pressure disc is configured to tightly press the brake disk in the axial direction. Specifically, the electromagnetic brake body is connected to the mounting base through fasteners, the shaft sleeve is fixedly connected to the central shaft through tight fit, and such a layout fully utilizes the spatial structure inside the in-wheel motor. When the electromagnetic brake body is connected to the mounting base, which serves as a basic support component of the in-wheel motor, no more space will be additionally occupied, so that the whole braking device is tightly integrated with the motor. At the same time, the shaft sleeve is directly connected to the central shaft, avoiding a complex transmission mechanism, further optimizing the space layout, and making the overall structure of the in-wheel motor more compact.

When the electromagnetic brake body is de-energized, the pressure disc in the electromagnetic brake body tightly presses the brake disc under the force of spring, the brake disc transmits the braking force to the central shaft through the shaft sleeve, so as to perform braking action on the central shaft and eventually limit the rotation of the rotor.

When the electromagnetic brake body is energized, an electromagnetic force is quickly generated to overcome the elastic force and thus release the pressing force on the brake disc, the brake disc and the shaft sleeve can rotate with the rotation of the central shaft. Since the electromagnetic brake body is directly connected to the mounting base, the mounting base provide a stable support structure for the electromagnetic brake body, so that the electromagnetic force is transmitted quickly and efficiently.

Optionally, the mounting base is further connected with an encoder which is located at one side of the braking device close to the rotor, and the encoder's code disk is connected to the central shaft. Since the encoder is mounted at the side of the braking device close to the rotor, the encoder can accurately obtain positional information of the central shaft and the rotor connected thereto in real time. For example, during the startup, stop and operation of the motor, the encoder can accurately record the rotational angle of the rotor and feed these positional data back to the control system of motor.

Through the above arrangement, real-time speed monitoring can be achieved. By detecting the number of pulses of the code disk in unit time, the encoder can calculate the rotational speed of the central shaft in real time, which is also the rotational speed of the rotor. This speed information is crucial for speed regulation and control of the motor.

Optionally, the side of the mounting base away from the rotor is provided with a cylindrical boss extending toward the end away from the rotor, and an arc surface on which the sealing ring is sleeved is formed along the circumference of the cylindrical boss; the arc surface along the circumference of the cylindrical boss provides a convenient positioning and fitting surface for mounting the sealing ring. During installation, it is only necessary to sleeve the sealing ring along the arc surface.

Optionally, the cylindrical boss has a mounting platform extending toward the end away from the rotor, the mounting platform has a second mounting hole for connecting with the braking device, and the mounting platform further has a third mounting hole for connecting with the device. Through the above arrangement, the braking device can be directly mounted at a position close to the motor's rotor, shortening the power transmission path and improving the braking response speed. At the same time, the connection with other device through the third mounting hole further expands the application scope of the motor in the whole system, such that the layout of the motor, the braking device and other device is more compact and reasonable.

Optionally, the central shaft and the rotor form an integrated structure, and the central shaft is rotatably connected to the mounting base at both sides of the mounting base through bearings.

In the above technical solution, the central shaft and the rotor are designed as an integrated structure, eliminating the connection link between the shaft and the rotor, and making the entire rotatable components into a whole. Compared to split structure in which the shaft and the rotor are connected through keys, splines, and other ways, the integrated structure reduces the potential faults caused by loose connections and wear. During the operation of the motor, the integrated structure can better withstand the electromagnetic force inside the motor and the torque and axial force brought by external loads, so the situation of local stress concentration is less likely to occur, thereby greatly improving the overall structural strength and stability of the motor.

In the above technical solution, the central shaft is rotatably connected to the mounting base at both sides thereof through bearings and such a double-sided support manner provides stable support force for the central shaft, effectively reducing diameter runout and axial runout of the central shaft during rotation. A stable rotational state helps to extend the service life of various components inside the motor, especially key components that closely match the central shaft, such as stator windings and bearings. At the same time, the central shaft and the rotor of an integrated structure reduces wear caused by relative movements between components, further improving the reliability of the motor in long term run.

Optionally, a first annular flange is provided on one side of the rotor close to the mounting base in the circumferential direction, a second annular flange is provided on the mounting base in the circumferential direction, the second annular flange is located on the inner side of the first annular flange, and a drainage passage is formed between the second annular flange and the first annular flange. The drainage passage formed by annular flange structures has larger circumferential drainage space, and can quickly drain the accumulated liquid. Under the action of gravity and centrifugal force generated by the operation of the motor, the liquid flows in the circumferential direction along the drainage passage and eventually drained to the outside of the motor via a suitable drainage port. Such an efficient drainage design can timely drain the liquid even in the event of a large amount of liquid entering in a short time, ensuring a dry environment inside the motor and maintaining normal operation.

Optionally, a tire is provided on the outer periphery of the rotor, an end face of one side of the rotor away from the mounting base is provided with a first mounting hole for connecting fasteners, and the tire is fixedly connected to the rotor through the fit between fasteners and the first mounting hole.

The tire is fixed through the fit between the fasteners and the first mounting hole in the end face of the rotor and such a connection manner makes the installation process of the tire relatively simple. During installation, the operator only needs to fit the tire over the rotor, align the first mounting hole in the tire with the first mounting hole in the end face of the rotor, and then screw the corresponding fasteners into the first mounting hole to complete the fixation of the tire and the rotor. When the tire needs to be replaced due to wear, damage or other condition, the old tire can be easily removed by disassembling the fasteners and a new tire can be installed. Such a design convenient for replacement reduces downtime of device caused by tire damage and improves the utilization efficiency of the device. At the same time, it also reduces the maintenance cost of the device because only a single component namely the tire needs to be replaced and there is no need to replace the entire motor drive system.

### Description of Drawings

In order to explain embodiments of the present invention or technical solutions in prior art more clearly, hereunder the drawings required to be used in the description of embodiments or prior art will be briefly introduced. Apparently, the drawings mentioned in the following description are some embodiments of the present invention and other drawings can be obtained by those of ordinary skills in the art based on these drawings without expending creative work.
FIG. 1 is a front semi-sectional view of the in-wheel motor provided in an example of the present invention;
FIG. 2 is a partial enlarged view of the area A in FIG. 1;
FIG. 3 is a perspective view of the mounting base in FIG. 1;
FIG. 4 is a perspective view of the rotor in FIG. 1;
FIG. 5 is a perspective view of the mounting base in FIG. 3 in a second angle;
FIG. 6 is a perspective view of the rotor in FIG. 4 in a second angle.

### Description of reference numerals:

1 - mounting base; 2 - stator; 3 - rotor; 4 - drainage passage; 5 - first section; 6 - second section; 7 third section; 8 - fourth section; 9 - sealing ring; 10 - mounting cylinder; 11 - central shaft; 12 - braking device; 13 - fourth mounting hole; 14 - first bearing; 15 - second bearing; 16 - first annular flange; 17 - second annular flange; 18 - first mounting hole; 19 - tire; 20 - arc surface; 21 - cylindrical boss; 22 - mounting platform; 23 - second mounting hole; 24 - third mounting hole.

### Embodiments

In order to make the objects, technical solutions, and advantages of examples of the present invention clearer, hereunder the technical solutions in examples of the present invention will be described clearly and fully in conjunction with the accompanying drawings in examples of the present invention. Obviously, the described examples are only some examples of the present invention, not all examples. All other examples, which are obtained by those skilled in the art based on the examples of the present invention without expending creative work, all fall into the protection scope of the present invention.

In the description of the present invention, it should be noted that the directional or positional relationship indicated by terms such as "center", "up", "down", "left", "right", "vertical", "horizontal", "inside", or "outside" are based on directional or positional relationships illustrated in the drawings, only for facilitating the description of the present invention and simplifying the description, rather than indicating or implying that the referred device or element must have a specific orientation, be constructed and operated in a specific orientation, and therefore cannot be understood as a limitation to the present invention. In addition, terms such as "first", "second", "third", or "fourth" are merely used for description purpose and cannot be understood as indicating or implying relative importance.

In the description of the present invention, it should be noted that unless otherwise specified and defined, the terms of "mount", "interconnect" and "connect" should be broadly understood, for example, it may be a fixed connection, or a detachable connection, or an integral connection; it may be a direct connection, or an indirect connection through an intermediate medium. For those of ordinary skills in the art, the specific meaning of the above terms in the present invention can be understood according to specific situation.

In addition, the technical features involved in different embodiments of the present invention described below may be combined with each other as long as they do not conflict with each other.

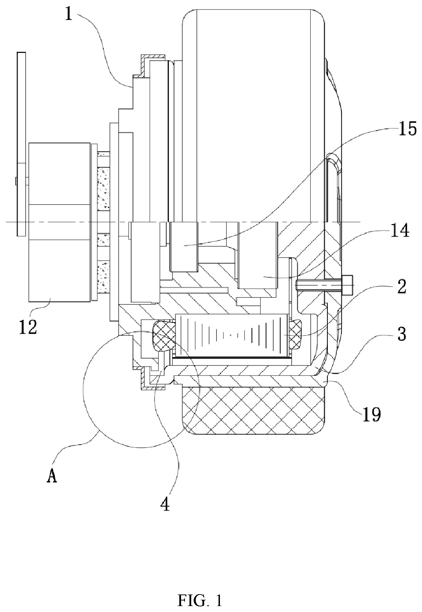

As shown in FIG. 1, one specific implementation of an in-wheel motor provided in this example is shown, the in-wheel motor comprises a mounting base 1, a stator 2 and a rotor 3. The stator 2 is connected to the mounting base 1, the rotor 3 is rotatably sleeved on the outer side of the stator 2, the rotor 3 has a semi-closed structure, the rotor 3 is in clearance fit with the mounting base 1 at one end of the rotor 3, and a drainage passage 4 with at least some sections extending in the radial direction is formed between the rotor 3 and the mounting base 1.

That is to say, in this example, the rotor 3 is of a semi-closed structure, the rotor 3 is in clearance fit with the mounting base 1 at one end of the rotor 3, a drainage passage 4 is formed between the rotor 3 and the mounting base 1, and at least some sections of the drainage passage 4 extend in the radial direction. Through this arrangement, water entering into the interior of the wheel hub can be drained along the drainage passage 4 during the actual use of the in-wheel motor, especially when driving on wet or waterlogged pavement, thereby avoiding the problem of water accumulation inside the in-wheel motor.

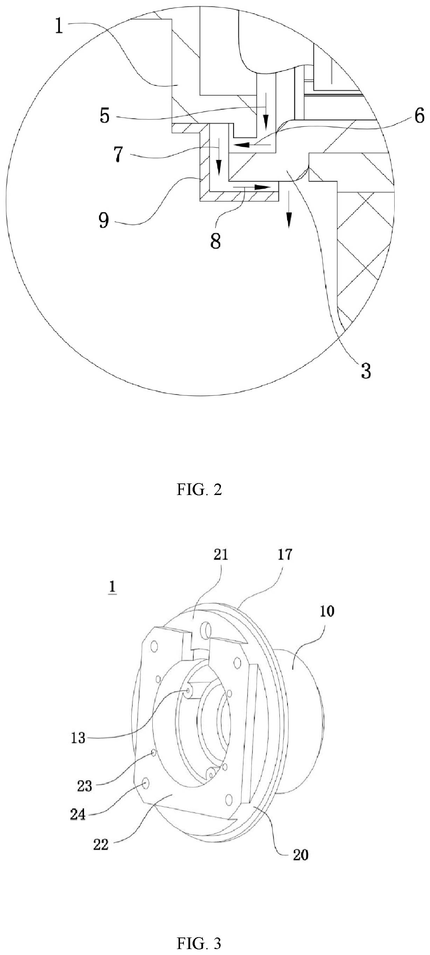

As shown in FIG. 2, in this example, the drainage passage 4 includes a first section 5 extending in the radial direction and a second section 6 extending in the axial direction, the outlet of the second section 6 faces the side close to the mounting base 1. A sealing ring 9 is disposed on the mounting base 1 at the outlet of the second section 6, and there is a spacing between the sealing ring 9 and the outlet of the second section 6. A labyrinth passage is formed between the sealing ring 9 and the rotor 3, and the outlet of the labyrinth passage faces the side away from the mounting base 1.

That is to say, in this example, the drainage passage 4 consists of the first section 5 extending in the radial direction and the second section 6 extending in the axial direction. The outlet of the second section 6 faces the side close to the mounting base 1, and the sealing ring 9 is disposed on the mounting base 1 at the position corresponding to the outlet of the second section 6. There is a spacing between the sealing ring 9 and the outlet of the second section 6. A labyrinth passage is formed between the sealing ring 9 and the rotor 3, and the outlet of the labyrinth passage faces the side away from the mounting base 1.

Through the above arrangement, multi-stage water defense lines are formed. When external moisture attempts to enter into the interior of the in-wheel motor, a large amount of water ingress can be effectively resisted through the resistance of the sealing ring 9. The design of the sealing ring 9 reduces the direct erosion of moisture on components such as the mounting base 1 and the rotor 3. Without such a design, when operate in a humid environment for a long time, the continuous erosion of moisture may cause the surface materials of the mounting base 1 and the rotor 3 to fall off or be damaged, affecting the structural stability of the motor. And now this design can effectively reduce such ingress, extend the service life of components, and improve the overall reliability of the motor.

Of course, the above description is not restrictive and in some alternative embodiments, the drainage passage 4 may also only include a first section 5 extending in the radial direction; alternatively, it may also include other sections, etc.

As shown in FIG. 2, in this example, the labyrinth passage includes a third section 7 extending in the radial direction and a fourth section 8 extending in the axial direction. That is to say, in this example, the labyrinth passage specifically includes a third section 7 extending in the radial direction and a fourth section 8 extending in the axial direction, with the outlet of the fourth section 8 facing the side away from the mounting base 1. This arrangement increases the difficulty for moisture to be directly sprayed into the interior of the motor from one side of the mounting base 1.

Of course, the above description is not restrictive, and in some alternative embodiments, the labyrinth passage may include a third section 7 extending in the radial direction; alternatively, it may also include other sections, etc.

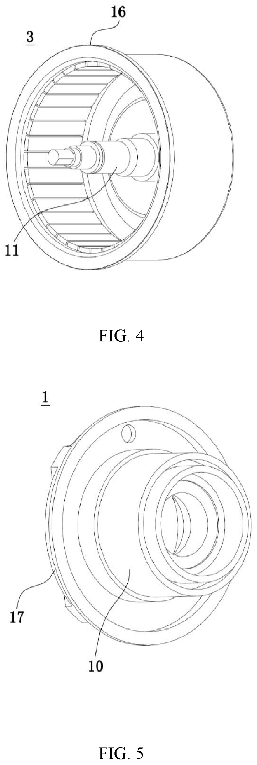

As shown in Figs. 3 and 4, in this example, the mounting base 1 includes a mounting cylinder 10 extending in the axial direction, and the stator 2 is mounted on the mounting cylinder 10. This arrangement makes the internal layout of the in-wheel motor more compact. The mounting cylinder 10 extending in the axial direction provides a stable mounting foundation for the stator 2 and the axial space inside the in-wheel motor is effectively utilized.

Of course, the above description is not restrictive, and in some alternative embodiments, the mounting cylinder 10 may be omitted, and the stator 2 may be mounted on other structures of the mounting base 1.

As shown in FIG. 5, the mounting base 1 has a central hole in which a central shaft 11 is rotatably arranged, and one end of the central shaft 11 is fixedly connected to the rotor 3. Specifically, the central shaft 11 may be connected to the rotor 3 through a threaded connection, a snap connection, or an integral molding connection etc. A stable rotatable support point is provided for the rotor 3 by rotatably disposing the central shaft 11 in the central hole of the mounting base 1 and fixedly connecting one end of the central shaft 11 with the rotor 3. The fit between the central shaft 11 and the central hole can constrain the radial and the axial displacements of the rotor 3, so that the rotor 3 maintains a stable rotational axis during motor operation.

As shown in FIG. 1, the other end of the central shaft 11 is connected with a braking device 12. By mounting the central shaft 11 in the central hole of the mounting base 1, the central hole provides a stable support for the central shaft 11 and restrict the radial displacements and the axial displacements of the central shaft 11 during rotation. By connecting the other end of the central shaft 11 with the braking device 12, a compact integration of motor driving and braking functions on the same shaft system is achieved. Such an integrated design reduces occupation of space of the vehicle chassis and simplifies the connection structure between the vehicle braking system and the drive system. Compared to the traditional layout in which the braking device 12 is separated from the motor, this design makes the overall structure of the vehicle more compact, which is conducive to lightweight design and space optimization of the vehicle.

In addition, since the braking device 12 is directly connected with the central shaft 11, braking can be made quickly and effectively. Specifically, the braking device 12 is a power-off braking device 12, when the vehicle stops running, the braking device 12 will immediately transmit the braking force to the central shaft 11, ensuring that the central shaft 11 remains in a stopped state continuously, and thereby avoiding arbitrary rotation of the wheels. Such a direct connection form significantly shortens the response time during the braking process, effectively improves braking efficiency, and provides strong guarantees for the safe stopping of the vehicle.

It should be noted that in this example, the braking device 12 includes an electromagnetic brake body and a shaft sleeve, wherein the electromagnetic brake body is connected to the mounting base 1, and the shaft sleeve is connected to the central shaft 11. The electromagnetic brake body includes a brake disc and a pressure disc, the brake disc is in circumferential limiting fit with the shaft sleeve, and the pressure disc is configured to axially press the brake disc. Specifically, the electromagnetic brake body is connected to the mounting base 1 through fasteners, the brake disc may be connected with the shaft sleeve through a spline structure, and the shaft sleeve is connected to the central shaft 11 through a tight fit. This layout fully utilizes the spatial structure inside the in-wheel motor. The mounting base 1 is the basic support component of the in-wheel motor, and the electromagnetic brake body is connected with the mounting base 1, without additionally occupying excessive space, so that the entire braking device 12 is tightly combined with the structure of the motor. At the same time, the shaft sleeve is directly connected to the central shaft 11, avoiding complex transmission mechanisms and further optimizing the spatial layout, making the overall structure of the in-wheel motor more compact.

When the electromagnetic brake body is de-energized, the pressure disc in the electromagnetic brake body presses the brake disc tightly under the force of the spring, the brake disc transmits the braking force to the central shaft 11 through the shaft sleeve, thereby performing braking operation on the central shaft 11 and ultimately achieving the restriction on the rotation of the rotor 3.

When the electromagnetic brake body is energized, it will quickly generate electromagnetic force to overcome the elastic force and release the pressing force on the brake disc, and the brake disc can rotate together with the shaft sleeve as the central shaft 11 rotates. Due to the direct connection between the electromagnetic brake body and the mounting base 1, the mounting base 1 provides a stable support structure for the electromagnetic brake body, so that the electromagnetic force is transmitted quickly and efficiently.

As shown in FIG. 3, in this example, an encoder is also connected to the mounting base 1, and the encoder is disposed at one side of the braking device 12 close to the rotor 3. The code disk of the encoder is connected to the central shaft 11. It should be noted that the structure of the encoder is not shown in FIG. 3. The encoder is a conventional product in the prior art and is applicable to this example.

Of course, the above description is not restrictive. In some alternative embodiments, the encoder may be omitted and other means may be adopted to monitor the rotational speed of the rotor 3.

As shown in FIG. 3, in this example, the mounting base 1 is provided with a fourth mounting hole 13 for mounting the encoder, the encoder may be mounted in the fourth mounting hole 13 through fasteners, and the central shaft 11 on the rotor 3 is connected to the code disk of the encoder after passing through the encoder.

As the encoder is mounted at the side of the braking device 12 close to the rotor 3, it can accurately obtain the positional information of the central shaft 11 and the rotor 3 connected thereto in real time. For example, during the startup, stop, and operation of the motor, the encoder can accurately record the rotational angle of the rotor 3 and feed these positional data back to the control system of the motor.

Through the above arrangement, real-time speed monitoring can be achieved. By detecting the number of pulses of the code disk in unit time, the encoder can calculate the rotational speed of the central shaft 11 in real time, which is the rotational speed of the rotor 3. This speed information is crucial for the speed regulation and control of the motor.

As shown in FIG. 3, in this example, the central shaft 11 is integrated with the rotor 3, and the central shaft 11 is rotatably connected to the mounting base 1 at both sides of the mounting base 1 through bearings.

In the above technical solution, the central shaft 11 and the rotor 3 are designed as an integrated structure, eliminating the connection link between the shaft and the rotor 3, making the entire rotatable components into a whole. Compared to the split structure in which the shaft and the rotor 3 are connected through keys, splines, and other ways, the integrated structure reduces the potential faults caused by loose connections and wear. During the operation of the motor, the integrated structure can better withstand the electromagnetic force from inside of the motor as well as the torque and axial force brought by external loads, so the situation of local stress concentration is less likely to occur, thereby greatly improving the overall structural strength and stability of the motor.

In the above technical solution, the central shaft 11 is rotatably connected to the mounting base 1 at both sides of the mounting base 1 through bearings. Specifically, as shown in Fig. 1, a first bearing 14 is sleeved over the central shaft 11 at one side of the mounting base 1, and a second bearing 15 is sleeved over the central shaft 11 at the other side of the mounting base 1, wherein the outer sides of the first bearing 14 and the second bearing 15 are in tight fit with the inner wall of the mounting base 1. Such a double-sided support manner provides a stable support force for the central shaft 11, effectively reducing diameter runout and axial runout of the central shaft 11 during rotation. A stable rotational state helps to extend the service life of various components inside the motor, especially for key components such as the windings of the stator 2 and bearings that closely match the central shaft 11. At the same time, the central shaft 11 and the rotor 3 that are of an integrated structure reduce wear caused by relative movements between components, further improving the reliability of the motor in long-term operation.

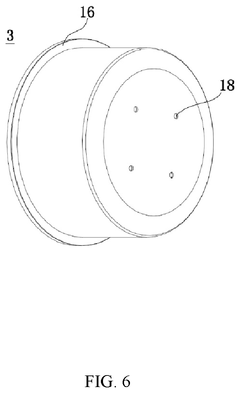

As shown in Figs. 5 and 6, a first annular flange 16 is circumferentially provided on one side of the rotor 3 close to the mounting base 1, and a second annular flange 17 is circumferentially provided on the mounting base 1, the second annular flange 17 is located inside the first annular flange 16, and the drainage passage 4 is formed between the second annular flange 17 and the first annular flange 16. The drainage passage 4 formed by the annular flange structure has a larger circumferential drainage space which can quickly drain the accumulated liquid. Under the action of gravity and centrifugal force generated by the operation of the motor, the liquid flows in the circumferential direction of the drainage passage 4 and eventually is drained to the outside of the motor via a suitable drainage port. With such an efficient drainage design. it is possible to timely drain the liquid even when a large amount of liquid flows into the motor in a short time, ensuring that the motor can maintain a dry interior environment and operate normally.

As shown in Fig. 3, in this example, a cylindrical boss 21 extending toward the end away from the rotor 3 is provided on the side of the mounting base 1 away from the rotor 3, and an arc surface 20 over which the sealing ring 9 is sleeved is formed on the cylindrical boss 21 in the circumferential direction; the arc surface 20 in the circumferential direction of the cylindrical boss 21 provides a convenient positioning and fitting surface for mounting the sealing ring 9. During installation, it is only necessary to sleeve the sealing ring 9 over the arc surface 20.

In this example, the mounting base 1 is provided with the arc surface 20 over which the sealing ring 9 is sleeved and the arc surface 20 is located at one side of the second annular flange 17, so that the sealing ring 9 is positioned with the second annular flange 17.

As shown in Fig. 3, in this example, the cylindrical boss 21 is provided with a mounting platform 22 extending toward the end away from the rotor 3, the mounting platform 22 is provided with a second mounting hole 23 for connecting with the braking device 12, and the mounting platform 22 is also provided with a third mounting hole 24 for connecting with a device. Through the above arrangement, the braking device 12 can be directly mounted at a position near the motor rotor 3, shortening the power transmission path and improving the braking response speed. Meanwhile, the connection between the third mounting hole 24 and other devices further expands the application range of the motor in the entire system, making the layout of the motor, the braking device 12, and other devices more compact and reasonable.

As shown in Fig. 6, in this example, a tire 19 is sleeved over the outer periphery of the rotor 3, an end face of the side of the rotor 3 away from the mounting base 1 is provided with a first mounting hole 18 for connecting fasteners, and the tire 19 is fixedly connected to the rotor 3 through the fit between fasteners and the first mounting hole 18.

The tire 19 is fixed through the fit between fasteners and the first mounting hole 18 in the end face of the rotor 3, and such a connection manner makes the installation process of the tire 19 relatively simple. During installation, the operator only needs to sleeve the tire 19 over the rotor 3, align the first mounting hole 18 in the tire 19 with the first mounting hole 18 in the end face of the rotor 3, and screw the corresponding fasteners into the first mounting hole 18 to complete the fixation of tire 19 and rotor 3. When the tire 19 needs to be replaced due to wear, damage, or other issues, the old tire 19 can be easily removed by removing fasteners and then a new tire 19 can be installed. Such a design facilitating easy replacement reduces downtime of device caused by the damage of the tire 19, improving the utilization efficiency of devices. At the same time, it also reduces the maintenance cost of the device, as only a single component namely tire 19 needs to be replaced, and there is no need to replace the entire motor drive system.

Of course, the above description is not restrictive. In some alternative embodiments, the tire 19 may be connected to the rotor 3 by using other structures, for example, the outer periphery of the rotor 3 is provided with an annular groove for clamping the tire 19.

### Working Principle:

For the in-wheel motor provided in this example, during installation, the stator 2 is mounted on the mounting cylinder 10 of the mounting base 1 to ensure a firm fixation. After mounting the first bearing 14 on the central shaft 11, the central shaft 11 passes through the central hole of the mounting base 1 to be fixedly connected with the rotor 3 (if they are an integral structure, this connection step is not required), and then the second bearing 15 is installed on the central shaft 11 again, wherein the first bearing 14 and the second bearing 15 are closely fitted with the inner wall of the mounting base 1 respectively.

The encoder is mounted in the mounting base 1, the sealing ring 9 is sleeved over the second flange of the mounting base 1, and then the braking device 12 is mounted in the mounting base 1. Finally, the tire 19 is sleeved over the outer periphery of the rotor 3 and tightly fitted with the end face of the rotor 3 through fasteners.

Thus, the assembly of the in-wheel motor is completed.

To replace the tire 19, it is only necessary to disassemble the fastener on the end face of the rotor, remove the tire 19, and install a new tire 19 by fastening it to the rotor 3 via the fastener.

Although the examples of the present invention have been described in conjunction with the accompanying drawings, those skilled in the art may make various modifications and variations without departing from the spirit and scope of the present invention, and such modifications and variations fall within the scope defined by the present invention.

## Claims

1. An in-wheel motor, **characterized in that**, said in-wheel motor comprises:
a mounting base (1);
a stator (2) connected to the mounting base (1);
a rotor (3) rotatably sleeved over the outer side of the stator (2), wherein the rotor (3) has a semi-closed structure, the rotor (3) is in clearance fit with the mounting base (1) at one end of the rotor (3), a drainage passage (4) with at least some sections extending in the radial direction is formed between the rotor (3) and the mounting base (1), the drainage passage (4) includes a first section (5) extending in the radial direction and a second section (6) extending in the axial direction, the outlet of the second section (6) faces toward the side close to the mounting base (1), a sealing ring (9) is disposed on the mounting base (1) at the outlet of the second section (6) and there is a spacing between the sealing ring (9) and the outlet of the second section (6), a labyrinth passage is formed between the sealing ring (9) and the rotor (3) with the outlet of the labyrinth passage facing toward the side away from the mounting base (1), the labyrinth passage includes a third section (7) extending in the radial direction and a fourth section (8) extending in the axial direction;
a first annular flange (16) is provided on one side of the rotor (3) adjacent to the mounting base (1) in the circumferential direction, and a second annular flange (17) is provided on the mounting base (1) in the circumferential direction, the second annular flange (17) is located inside the first annular flange (16), and the drainage passage (4) is formed between the second annular flange (17) and the first annular flange (16).

2. The in-wheel motor according to claim 1, wherein the mounting base (1) includes a mounting cylinder (10) extending in the axial direction, and the stator (2) is mounted on the mounting cylinder (10).

3. The in-wheel motor according to claim 1, wherein the mounting base (1) includes a central hole in which a central shaft (11) is rotatably disposed, one end of the central shaft (11) is fixedly connected to the rotor (3), the other end of the central shaft (11) is fixedly connected with a braking device (12) which maintains the braking on the central shaft (11) in a normal state and releases the braking on the central shaft (11) when energized.

4. The in-wheel motor according to claim 3, wherein the braking device (12) includes an electromagnetic brake body and a shaft sleeve, the electromagnetic brake body is connected to the mounting base (1), and the shaft sleeve is connected to the central shaft (11), the electromagnetic brake body includes a brake disc and a pressure disc, the brake disc and the shaft sleeve are in circumferential limiting fit, and the pressure disc is configured to axially press the brake disc.

5. The in-wheel motor according to claim 4, wherein the mounting base (1) is further connected with an encoder located at one side of the braking device (12) close to the rotor (3), the encoder's code disk is connected to the central shaft (11).

6. The in-wheel motor according to claim 3, wherein the side of the mounting base (1) away from the rotor (3) includes a cylindrical boss (21) extending toward the end away from the rotor (3), and an arc surface (20) over which the sealing ring (9) is sleeved is formed along the circumference of the cylindrical boss (21);
the cylindrical boss (21) includes a mounting platform (22) extending toward the end away from the rotor (3), the mounting platform (22) includes a second mounting hole (23) for connection with the braking device (12), and the mounting platform (22) further includes a third mounting hole (24) for connection with devices.

7. The in-wheel motor according to any of claims 3-6, wherein the central shaft (11) and the rotor (3) form an integrated structure, the central shaft (11) is rotatably connected to the mounting base (1) at both sides of the mounting base (1) through bearings.

8. The in-wheel motor according to any of claims 1-6, wherein a tire (19) is sleeved over the outer periphery of the rotor (3), an end face of the side of the rotor (3) away from the mounting base (1) is provided with a first mounting hole (18) configured for connecting fasteners, the tire (19) and the rotor (3) are fixedly connected through the fit between the fasteners and the first mounting hole (18).
